# EUROPEAN PATENT APPLICATION

(11) **EP 2 763 102 A1**
(43) Date of publication of application: **06.08.2014**
(21) Application number: 12836564.0
(22) Date of filing: 27.09.2012
(51) Int. Cl.: G06T 7/00

(54) **FACE RECOGNITION METHOD, APPARATUS, AND COMPUTER-READABLE RECORDING MEDIUM FOR EXECUTING THE METHOD**

(30) Priority: 27.09.2011 KR 20110097795
(71) Applicant: Intel Corporation, Santa Clara, CA 95054 (US)
(72) Inventor: LEE, Hyungsoo, Gangnam-gu Seoul 135-919 (KR); JE, Hongmo, Seoul 153-754 (KR); KANG, Bongnam, Nam-gu, Pohang-si Gyeongsangbuk-do 790-784 (KR)
(74) Representative: Goddar, Heinz J.
(86) International application number: PCT/KR2012/007844
(87) International publication number: WO 2013/048160

(57) **Abstract**

The present invention relates to a face recognition method, an apparatus, and a computer-readable recording medium for executing the method. According to an aspect of the present invention, the face recognition method includes: (a) a key point setting step of setting key points as designated positions on an input face image; (b) a key point descriptor extracting step of extracting each descriptor for each key point; and (c) a matching step of determining whether the input face image matches pre-stored face images using descriptors for key points within a designated region including each descriptor for each first key point obtained from the input face image, and second key points of pre-stored face images which correspond to first key points obtained from the input face image.

## Description

### Technological Field

The present invention relates to a face recognition method, an apparatus, and a computer-readable recording medium for executing the method. More specifically, the present invention pertains to a face recognition method, apparatus, and computer-readable recording medium for executing the method wherein face recognition is performed based on the key point extracted from a designated position on the input image so that methods such as SIFT (Scale Invariant Feature Transformation) can be applied to the face recognition to produce better performance and allow for greater recognition accuracy by reflecting changes to the face image.

### Technological Background

Biometric technology is technology that recognizes physical features such as fingerprints, face, iris, veins, etc. which are different for each individual. Such physical features can be utilized in the securities field since they cannot be stolen or copied by others, like keys or passwords, and there is no danger of them becoming changed or lost. Of these, face recognition technology includes technology that detects a face area from a video or picture image and discerns the identification of the face detected in the face area. Thus, it can be used for security as well as in a variety of applications in this smart phone era.

More specifically, face recognition technology is a technology that identifies a face using the position of features in a detected face image and such features include the center of the eye, both ends of each eye, both ends and center of each eyebrow, both ends of the lips, etc.

Face recognition technology traditionally uses statistical methods such as PCA (Principal Component Analysis) or LDA (Local Descriptor Analysis). However, since feature data extracted from localized areas of the face are stronger against lighting, poses, and changes to the face, methods using local descriptive analysis is the standard that is used more these days.

Meanwhile, a method using SIFT (Scale Invariant Feature Transformation), which shows great object identification performance, has been limited in its application due to poor performance when it comes to face recognition. The reasons why this method shows poor performance for face recognition are as follows. First, unlike an object, a person's face is not angled, is changeable, and even the same person's face may appear differently depending on the viewing direction which causes the position of key points to change as well. However, the SIFT method is not able to recognize a face in consideration of such variables. Secondly, distance based matching methods or area based matching methods that are generally used in descriptor based matching methods perform poorly on face images with lots of lighting or poses. Accordingly, in order to apply the SIFT method, traditionally used for object recognition, for face recognition, there was a need to solve the problems described above.

Even when using methods other than SIFT such as SURF, LESH, and GLOH to perform face recognition, it is difficult to improve face recognition performance.

### Detailed Description of the Invention

### Technological Task

The present invention has the purpose of solving all of the problems that have been described above.

In addition, in order to solve the problems of existing technologies by improving face recognition performance, the present invention performs face recognition with reference to descriptors of key points extracted from designated positions on each of the input face images and the pre-stored face images.

The present invention has another purpose of allowing good face recognition performance even when the input face image has changed by assigning identifiers to all key points in the input face image and assigning to most frequently assigned identifier as the identifier for the input face image.

### Method for Solving the Task

A representative composition of the present invention, for achieving the aforementioned purposes, is as follows.

According to an aspect of the present invention, the face recognition method includes: (a) a key point setting step of setting key points at designated positions on an input face image; (b) a key point descriptor extracting step of extracting each descriptor for each key point; and (c) a matching step of determining whether the input face image matches the pre-stored face images using descriptors for key points within a designated region including each descriptor for each first key point obtained from the input face image, and second key points of pre-stored face images which correspond to first key points obtained from the input face image.

According to another aspect of the present invention, the face recognition apparatus includes a key point position setting unit that sets key points at designated positions on an input face image, a key point descriptor extracting unit that extracts descriptors for each of the aforementioned key points, and a matching unit that determines whether the input face image matches pre-stored face images using descriptors for key points within a designated region including each descriptor for each first key point obtained from the input face image, and second key points of pre-stored face images which correspond to first key points obtained from the input face image.

According to the present invention, the aforementioned apparatus is characterized by having an additional face detecting unit that detects a face from an input image and a normalizing unit that generates the aforementioned face image by normalizing the aforementioned detected face image to a designated face image size.

The present invention is characterized by the distances between each of the descriptors in the aforementioned first key points and the aforementioned second key points being compared, identifiers being assigned to each of the aforementioned first key points, and the most frequently assigned identifier being assigned as the identifier for the aforementioned face image.

The present inventions is characterized by grid blocks being formed on the aforementioned face image and the aforementioned grid blocks being formed as the aforementioned designated region or the nearby blocks, centered around the second key point that corresponds to the first key point, obtained from the aforementioned face image, being set as the designated region.

In addition, in order to implement the present invention, a computer-readable recording medium, for storing the computer program that executes the aforementioned method, is further provided.

### Effect of the Invention

According to the present invention, faces can be recognized with high accuracy by reflecting changes to the face image since key points are set on each of the fixed positions of the input face images and the pre-stored face images and descriptors are extracted from each of the key points to perform the face recognition.

According to the present invention, recognition performance is good even when portions of the face image regions don't match due to changes in lighting or poses, since the distances between the descriptors of each key point in the input face image and each of the descriptors for the key points of nearby regions of each key point that corresponds to the pre-stored face image, are both compared so that an identifier is assigned to the closest key point and an identifier for the input face image is assigned by voting for the identifier assigned to all key points of the input face image.

### Brief Description of the Diagrams

Figure 1 is a block diagram that shows the composition of a face recognition apparatus that uses SIFT technology in one embodiment of the present invention.
Figure 2 shows the operation of each block in the face recognition apparatus in Figure 1.
Figure 3 shows the operation of one embodiment of the matching unit in Figure 1.
Figure 4 shows the operation of another embodiment of the matching unit in Figure 1.

### <Description of the Labels>

100: Face recognition apparatus
110: Face detecting unit
120: Normalizing unit
130: Key point position setting unit
140: Key point descriptor extracting unit
150: Matching unit

### Modes of Implementing the Invention

A detailed description of the present invention described below will refer to the attached diagram that illustrates particular embodiments showing how this invention may be implemented. These embodiments are explained in detail so that it is sufficient for those skilled in the art to implement the present invention. It must be understood that while the various embodiments of the present invention are different from each other, they need not be mutually exclusive. For example, particular forms, composition, and characteristics of an embodiment described here may be implemented in a different embodiment without departing from the spirit and scope of the present invention. In addition, it must be understood that the location or arrangement of individual components within each of the disclosed embodiments may be changed without departing from the spirit and scope of the present invention. Accordingly, the following detailed description is not intended to be understood in a limiting sense and the scope of the present invention, if properly described, is only limited by all scopes equivalent to the arguments made in the claims as well as the attached claims. Similar labels used in the diagrams refer to same or similar functions throughout various aspects.

A detailed description of the preferred embodiments of the present invention will be given below with references made to the attached diagrams so that those skilled in the art to which the present invention belongs can easily implement the present invention.

Note that while the present invention is applicable to face recognition apparatuses that use technologies such as SURF (Speeded Up Robust Features), LESH (Local Energy based Shape Histogram), and GLOH (Gradient Location and Orientation Histograms), in addition to face recognition apparatuses that use SIFT technology, a face recognition apparatus that uses SIFT technology will be used in the example below for the purpose of convenience.

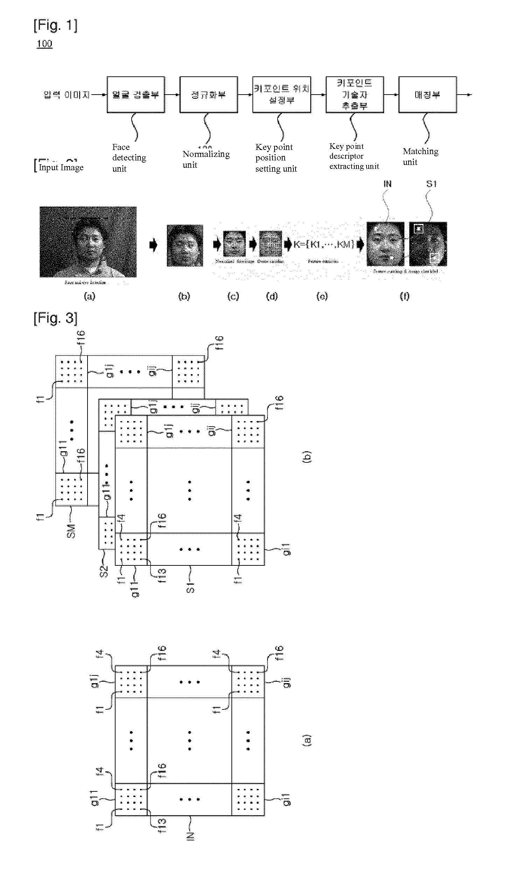

Figure 1 is a block diagram that shows the composition of a face recognition apparatus that uses SIFT technology in one embodiment of the present invention.

According to Figure 1, a face recognition apparatus (100) may be comprised of a face detecting unit (110), a normalizing unit (110), a key point position setting unit (130), a key point descriptor extracting unit (140), and a matching unit (150).

An explanation of the functions of each block shown in Figure 1 is as follows.

The face detecting unit (110) can detect a face from an input image that has a face within its frame. In order to detect a face, the face detecting unit (110) can detect eyes, for example, as well as additionally detecting eyebrows, nose, mouth, etc. The reason for detection in such a manner may be to arrange the input face image in the same orientation as the stored face image.

The normalizing unit (120) may normalize the detected face image to a gray image of a predesignated size.

The key point position setting unit (130) can set key points in fixed positions on the normalized face image.

The key point descriptor extracting unit (140) can extract descriptors from each of the key points by calculating the grading magnitude and orientation from each of the image sample points within nearby regions of each key point. While the method developed by D. Lowe and disclosed in a paper entitled "Distinctive image features from scale-invariant Keypoints" published in the "International Journal of Computer Vision, Volume 60, Issue 2" may be used as the method for extracting the descriptors from each of the key points, it is not necessary to be limited to this method and description extraction from key points may be realized by applying various other methods.

The matching unit (150) can assess whether the input face image and the pre-stored face image matches by using descriptors of each of the key points obtained from the input image's normalized face image and descriptors from the key points of designated regions, which include key points of each of the pre-stored face images that correspond to the key points obtained from the aforementioned input image (a normalized input face image, for example) in the DB (database that stores various face images used for face recognition).

More specifically, the matching unit (150) uses descriptors of each of the key points obtained from the input image's normalized face image and the descriptors of key points within the designated region that includes key points of each of the pre-stored face images that correspond to the key points obtained from the input image's normalized face image to calculate and compare the distances between the key points in the input face image and the pre-stored face image in order to assign identifiers (ID) to each of the key points obtained from the input image's normalized face image and assign the identifier that has been most frequently assigned as the identifier of the input image's normalized face image.

To this end, in each of the pre-stored face images, the face can be detected and normalized to a gray image in the same size as the input image, just the same as with the input image, and the key points can be set on positions that are the same as the positions of the key points that have been pre-set on the normalized input face image and the descriptors of the set key points can be extracted and stored in advance.

In figure 1, the face detecting unit (110) and the normalizing unit (120) may not always be necessary. For example, if the face image that is entered into the key point position setting unit

(130) is arranged in the same orientation as the pre-stored face image and has the same size gray image, the face detecting unit (110) and the normalizing unit (120) may be omitted.

Figure 2 shows the operation of each block in the face recognition apparatus in Figure 1 wherein

(a) indicates the input image, (b) indicates the face image detected by the face detecting unit (110), (c) indicates the face image that's been normalized by the normalization unit (120), (d) indicates the face image marked with key points that have been extracted by the key point extracting unit (130), and (e) indicates the vector (K) extracted by the key point descriptor extracting unit (140) which can be expressed as K={k1, ..., kM and k1 indicates the descriptor extracted from the first key point and kM indicates the descriptor extracted from the number M key point. (f) indicates that the matching unit (150) has detected a change to the face image and that it has recognized the input face image (IN) as being the same face as the pre-stored face image (S1).

Figure 3 shows the operation of one embodiment of the matching unit in Figure 1 wherein (a) indicates the key points of the normalized input face image (IN) and (b) indicates the key points of M number of face images (S1 - SM) that have been normalized and pre-stored. In addition, g11 - gij indicates grid blocks, size 4x4 for example, of the face images (IN, S1 - SM) and f1 - f16 indicates the 16 key points within each of the grid blocks (g11 - gij). Note that even though figure 3 shows 16 key points, it's not limited to this number.

The matching unit (150) in Figure 1 uses the descriptor of the key point (f1) of the input face image's (IN) grid block (g11) and the descriptors of the key points (f1 - f16) of each of the pre-stored face images' (S1 - SM) grid blocks (g11) to calculate the distance (while the concept of distance here may include Euclidean distance, it is not limited to it) between each of the key points (f1 and f1, f1 and f2, ..., f1 and f16) and assign the identifier of the pre-stored face image, that includes the key point with the closest distance, to the key point (f1) of the input face image (IN). In addition, it uses the descriptor of the block's (g11) key point (f2) and the descriptors for the key points (f1 - f16) for each of the grid blocks (g11) in the pre-stored face images (S1 - SM) to calculate the distance between each of the key points (f2 and f1, f2 and f2, ..., f2 and f16) and assign the identifier of the pre-stored face image, that includes the key point with the shortest distance, to the key point (f2) of the input face image (IN). In the same way, one identifier will be assigned, among all the identifiers of face images (S1 - SM) that have been pre-stored for each of the key points (f1 - f16) for each of the input face image (IN) grid blocks (g11 - gij). In other words, while one identifier is assigned, among the all the identifiers for face images (S1 - SM) that have been pre-stored for each of the input face image (IN) key points (f1 - F16), the descriptors for each key point of the input face image (IN) and descriptors of key points within the grid block of pre-stored face images (S 1 - SM) that corresponds to the grid block, which includes each key point of the input face image (IN), may be used to calculate the distance for each of the key points so that the identifier for the pre-stored face image, that includes the key point with the shortest distance, is assigned as the identifier for each of the key points (f1 - f16) for each of the input face image (in) grid blocks (g11 - gij).

In addition, the matching unit (150) is able to vote for the identifiers that have been assigned to all of the key points on the input face image (IN) and at this time, one identifier from amongst the identifiers of the pre-stored images (S1 - SM) can be assigned to the input face image (IN). In other words, of all the identifiers that have been assigned to all of the key points on the input face image (IN), the most frequently assigned identifier can be assigned as the identifier for the input face image (IN). At this time, while the most frequently assigned identifiers for each block can be selected and the most frequently selected identifier from the entire image can be assigned as the identifier for the input face image (IN), it will not be necessarily limited thereto. After going through the above process, the face of the input face image (IN) and the face of the pre-stored face image, with an identifier that is identical to the assigned identifier, is finally recognized to be the same face.

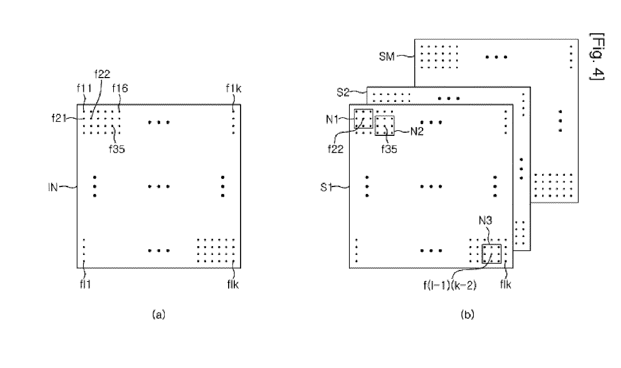

Figure 4 describes another embodiment of the operations of the matching unit in Figure 1 wherein (a) indicates the key points of the normalized input face image (IN) and (b) indicates the key points of the normalized and pre-stored M number of face images (S1 - SM). In addition, f11 - flk indicates the key points for each of the face images (IN, S1 - SM), N1 - N3 indicates the nearby 3x3 blocks that designates the nearby regions of each of the key points (f22, f34, ..., f(1-1) (k-2)), and in such a way, nearby blocks may be designated for all key points.
Note that even though figure 4 shows a nearby region size of 3x3, it is not limited to this size.

The matching unit (150) in figure 1 uses the descriptors of the input face image (IN) key point (f22) and the descriptors of the key points within the blocks (N1) near the key points (f22) of each of the pre-stored face images (S1 - SM) to calculate the distance between each of the key points and to assign an identifier to the pre-stored face image that includes the key point with the shortest distance. In the same way, the descriptors of the all of the key points for the input face image (IN) and the descriptors of the key points within the blocks near the key points of each of the pre-stored face images (S 1 - SM) in positions that correspond to the input face image (IN) are used to calculate the distance between each of the key points and assign an identifier to the pre-stored face image that includes the key point with the shortest distance. In other words, while one identifier is assigned among all the identifiers for face images (S 1 - SM) that have been pre-stored for each of the input face image (IN) key points (f11 - flk), the descriptors for each key point of the input face image (IN) and descriptors of key points in the grid blocks of all pre-stored face images (S1 - SM) that include key points of positions that correspond to each of the input face images' (IN) key points are used to calculate the distance between each of the key points so that the identifier for the pre-stored face image, that includes the key point with the shortest distance, is assigned as the identifier for the input face image (IN).

In addition, the matching unit (150) votes for the identifiers that have been assigned to all of the key points on the input face image (IN) so that one identifier can be assigned to the input face image (IN), from among all the identifiers of the pre-stored images (S1 - SM). In other words, of the identifiers that have been assigned to all of the key points on the input face image (IN), the most frequently assigned identifier can be assigned as the identifier for the input face image (IN). At this time, while the most frequently assigned identifiers for each nearby block can be selected and the most frequently selected identifier from the entire image can be assigned as the identifier for the input face image (IN), it will not be necessarily limited thereto. After going through the above process, the face of the input face image (IN) and the face of the pre-stored face image, is finally recognized to be the same face with an identifier that is identical to the assigned identifier.

In other words, the matching unit (150) of the present invention assigns identifiers to all of the key points on the input face image (IN) votes for the identifiers that have been assigned to all of the key points to assign the most frequently assigned identifier as the identifier of the input face image (IN).

In figure 3 and figure 4, the key points of the input face image (IN) can be expressed using the term first key points, the key points of the pre-stored face images (S1 - SM) can be expressed using the term second key points, and these terms are used in the claims below.

The embodiments of the present invention, described above, can be implemented through program commands that can be performed through a variety of computer configurations and can be recorded on a recommended computer-readable recording medium. The aforementioned recommended computer-readable recording medium may include program commands, data files, or data structures solely or in combination thereof. The program command recorded on the aforementioned recommended computer-readable recording medium may be especially designed and created for the present invention or may be known and recommended by those in the computer software field. Examples of recommended computer-readable recording medium include hard disks, magnetic media such as floppy disks and magnetic tapes, optical recording media such as CD-ROM or DVD, magneto-optical media such as floptical disks, and hardware devices especially configured to store and execute program commands such as ROM, RAM, and flash memory. Examples of program commands include machine codes created using compilers as well as advanced language codes that can be executed on computers using interpreters. Examples of program commands include machine codes created using compilers as well as advanced language codes that can be executed on computers using interpreters.

While this invention has been explained using specific details such as specific component configurations, limited embodiments, and diagrams, this has only been provided to aid the overall understanding of this invention. Thus, this invention is not limited to the embodiments described above and may be revised and modified in various ways by those with common knowledge regarding the field that this invention is part of.

Accordingly, the ideas of this invention are not to be limited to the described embodiments and all ideas that fall not only under this invention's scope of patent claims, but also even ideas that are equal or have equivalent modifications to the scope of patent claims can be thought to be a part of the idea in this invention.

## Claims

1. A face recognition method that is comprised of
(a) A key point setting step of setting key points at designated positions on an input face image;
(b) A key point descriptor extracting step of extracting each descriptor for each key point; and
(c) A matching step of determining whether the input face image matches pre-stored face images using descriptors for key points within a designated region, including each descriptor for each first key point obtained from the input face image, and second key points of pre-stored face images which correspond to first key points obtained from the input face image.

2. In regards to Claim 1,
A face recognition method that is **characterized by** the aforementioned step (c) using the descriptors of each of the aforementioned first key points and descriptors of the aforementioned second key points to calculate and compare the distances between each of the first key points and the second key points to assign the identifier of a specific pre-stored face image, that includes the second point with the closest distance from amongst the pre-stored face images, as the identifier for each of the first key points and assigns the most frequently assigned identifier as the identifier of the aforementioned input face image.

3. In regards to Claim 2,
A face recognition method **characterized by** the Euclidean distance being used to calculate distance when descriptors of each of the aforementioned first key points and the descriptors of the aforementioned second key points are used to calculate the distance between each of the first key points and the second key points.

4. In regards to Claim 1,
A face recognition method that is **characterized by** the aforementioned step (c) forming grid blocks on the aforementioned face image and setting the aforementioned grid blocks as the aforementioned designated regions.

5. In regards to Claim 4,
A face recognition method **characterized by** using the descriptors of each of the aforementioned first key points and descriptors of the aforementioned second key points to calculate and compare the distances between each of the first key points and the second key points to assign the identifier of a specific pre-stored face image, that includes the second point with the closest distance from amongst the pre-stored face images, as the identifier for each of the first key points and selects the most frequently assigned identifiers for each of the aforementioned grid blocks and then assigns the most frequently selected identifier as the identifier of the aforementioned input face image.

6. In regards to Claim 1,
A face recognition method that is **characterized by** the aforementioned step (c) setting the nearby blocks, centered around the second key points that correspond to the first key points obtained from the aforementioned face image, as the aforementioned designated region.

7. In regards to Claim 6,
A face recognition method **characterized by** using the descriptors of each of the aforementioned first key points and descriptors of the aforementioned second key points to calculate and compare the distances between each of the first key points and the second key points to assign the identifier of a specific pre-stored face image, that includes the second point with the closest distance from amongst the pre-stored face images, as the identifier for each of the first key points and selects the most frequently assigned identifiers for each of the aforementioned nearby blocks and then assigns the most frequently selected identifier as the identifier of the aforementioned input face image.

8. In regards to Claim 1,
A face recognition method that is **characterized by** additionally including
(d) a face detecting step of detecting a face from the aforementioned input face image and
(e) a normalization step of normalizing the aforementioned detected face image to a designated size face image to generate the aforementioned input face image while
the aforementioned step (a)
sets key points on designated positions of the aforementioned normalized input face image.

9. In regards to Claim 8,
A face recognition method that is **characterized by** the aforementioned step (d) additionally detecting face features from the aforementioned input face image in order to arrange the aforementioned detected face image in the same orientation as the aforementioned pre-stored face image.

10. In regards to Claim 9,
A face recognition method that is **characterized by** the aforementioned features including features of the eyes, nose, and lips.

11. In regards to Claim 1,
A face recognition method that is **characterized by** the aforementioned input face image and the aforementioned pre-stored face image being arranged in the same orientation and having gray images of the same size.

12. In regards to Claim 1,
A face recognition method that is **characterized by** the fact that in the aforementioned step (a), the designated positions are fixed in the aforementioned input face image where the aforementioned key points are set.

13. A face recognition apparatus that is comprised of a key point position setting unit that sets key points in designated positions of the input face image;
a key point descriptor extracting unit that extracts descriptors for each of the aforementioned key points; and
a matching unit that determines whether the aforementioned input face image matches the aforementioned pre-stored face images using descriptors for each of the first key points, obtained from the aforementioned input face image, and descriptors of key points within the designated region that includes second key points of each of the pre-stored face images that correspond to first key points obtained from the aforementioned input face image.

14. In regards to Claim 13,
a face recognition apparatus that is **characterized by** the aforementioned matching unit using the descriptors of each of the aforementioned first key points and descriptors of the aforementioned second key points to calculate and compare the distances between each of the first key points and the second key points to assign the identifier of a specific pre-stored face image, that includes the second point with the closest distance from amongst the pre-stored face images, as the identifier for each of the first key points and assigns the most frequently assigned identifier as the identifier of the aforementioned input face image.

15. In regards to Claim 14,
a face recognition apparatus **characterized by** the Euclidean distance being used to calculate distance when descriptors of each of the aforementioned first key points and the descriptors of the aforementioned second key points are used to calculate the distance between each of the first key points and the second key points.

16. In regards to Claim 13,
a face recognition apparatus that is **characterized by** the aforementioned matching unit forming grid blocks on the aforementioned face image and setting the aforementioned grid blocks as the aforementioned designated regions.

17. In regards to Claim 16,
a face recognition apparatus **characterized by** using the descriptors of each of the aforementioned first key points and descriptors of the aforementioned second key points to calculate and compare the distances between each of the first key points and the second key points to assign the identifier of a specific pre-stored face image, that includes the second point with the closest distance from amongst the pre-stored face images, as the identifier for each of the first key points and selects the most frequently assigned identifiers for each of the aforementioned grid blocks and then assigns the most frequently selected identifier as the identifier of the aforementioned input face image.

18. In regards to Claim 13,
a face recognition apparatus that is **characterized by** the aforementioned matching unit setting the nearby blocks as the aforementioned designated region, centered around the second key points that correspond to the first key points obtained from the aforementioned face image.

19. In regards to Claim 18,
a face recognition apparatus **characterized by** using the descriptors of each of the aforementioned first key points and descriptors of the aforementioned second key points to calculate and compare the distances between each of the first key points and the second key points to assign the identifier of a specific pre-stored face image, that includes the second point with the closest distance from amongst the pre-stored face images, as the identifier for each of the first key points and selects the most frequently assigned identifiers for each of the aforementioned nearby blocks and then assigns the most frequently selected identifier as the identifier of the aforementioned input face image.

20. In regards to Claim 13,
a face recognition apparatus that is **characterized by** additionally including a face detecting unit that detects a face from the initial input face image and
a normalizing unit that normalizes the aforementioned detected face image to a designated size face image to generate the aforementioned input face image while
the aforementioned key point position setting unit sets key points on designated positions of the aforementioned normalized input face image.

21. In regards to Claim 20,
a face recognition apparatus **characterized by** the aforementioned face detecting unit additionally detecting face features from the aforementioned input face image in order to arrange the aforementioned detected face image in the same orientation as the aforementioned pre-stored face image.

22. In regards to Claim 21,
a face recognition apparatus that is **characterized by** the aforementioned features including features of the eyes, nose, and lips.

23. In regards to Claim 13,
A face recognition apparatus that is **characterized by** the aforementioned input face image and the aforementioned pre-stored face image being arranged in the same orientation and having gray images of the same size.

24. In regards to Claim 13,
a face recognition apparatus that is **characterized by** the designated positions of the aforementioned input face image, on which key points are set by the aforementioned key point position setting unit, being fixed.

25. A computer-readable recording medium that stores a computer program that executes any of the methods in Claim 1 through Claim 12.
